# EUROPEAN PATENT SPECIFICATION

(11) **EP 2 878 505 B1**
(45) Date of publication and mention of the grant of the patent: **17.04.2019**
(21) Application number: 14195708.4
(22) Date of filing: 01.12.2014
(51) Int. Cl.: B60W 10/06, F16H 61/28, B60T 10/02

(54) **AUXILIARY HYDRAULIC BRAKING DEVICE FOR A VEHICLE HAVING AN INTERNAL COMBUSTION ENGINE**
HYDRAULISCHE BREMSHILFSVORRICHTUNG FÜR EIN FAHRZEUG MIT EINER BRENNKRAFTMASCHINE
DISPOSITIF DE FREINAGE HYDRAULIQUE AUXILIAIRE POUR UN VÉHICULE PRÉSENTANT UN MOTEUR À COMBUSTION INTERNE

(30) Priority: 02.12.2013 IT MI20132013
(43) Date of publication of application: 03.06.2015
(73) Proprietor: SAME DEUTZ-FAHR ITALIA S.p.A., 24047 TREVIGLIO (BG) (IT)
(72) Inventor: Ribaldone, Massimo, 24047 Treviglio (BG) (IT); Ravizza, Alessandro, 24040 Pognano (BG) (IT)
(74) Representative: Branca, Emanuela

(56) References cited:
- EP-A1- 2 466 018
- EP-A2- 1 013 973
- EP-A2- 1 308 359
- EP-A2- 1 894 765
- WO-A1-91/04879
- WO-A1-2005/080166
- US-A1- 2008 207 398
- US-A1- 2010 137 102
- US-A1- 2012 205 178
- US-A1- 2013 047 955

## Description

The present invention refers to an auxiliary hydraulic braking device for a vehicle having an internal combustion engine, as well as to a vehicle having an internal combustion engine provided with such an auxiliary hydraulic braking device.

The manufacturers of current internal combustion engines for vehicles in general, be they controlled-ignition engines (Otto cycle) or spontaneous ignition engines (Diesel cycle), are progressively reducing their displacement, whilst still maintaining, and sometimes increasing, their overall performance. This operation, so-called "*engine downsizing*", is usually carried out by manufacturers by reducing the overall displacement of the engine and/or the number of respective cylinders. Engine downsizing allows the following main advantages to be obtained with respect to similar engines with higher displacement:
- reduction in polluting emissions, so as to ensure that the increasingly-strict anti-pollution standards are met;
- reduction in overall fuel consumption;
- improved thermodynamic efficiency of the engine;
- reduction in overall size of the engine.

The reduction in displacement and/or number of cylinders in an internal combustion engine, however, also means a reduction in the braking action of the engine itself. Indeed, it is well known that, in certain conditions, an engine can be used to exert a braking action on the vehicle, but the efficiency of such braking action is usually directly proportional to the compression ratio and to the cubic volume of the engine itself.

On some Diesel engines, particularly on large displacement engines mounted on lorries, buses, agricultural and/or earth-moving machinery, there can be a special auxiliary braking device commonly known as "exhaust brake". The exhaust brake is usually a substantially mechanical device consisting of a throttle valve that, if actuated, partially closes the exhaust pipe while the injection of fuel is simultaneously interrupted. In this way, the exhaust step of the engine, as well as the compression step, also becomes a braking step, thus increasing the overall braking action of the vehicle.

The braking action of an engine and/or the exhaust brake itself are used mainly in long descents and are sometimes essential for vehicles of considerable mass and with possible trailers in tow, since they allow more braking of the vehicle without straining the service brake system too much, avoiding overheating and consequent deterioration of braking performance. In the case of a reduction in displacement and/or in the number of cylinders in an internal combustion engine, therefore, the efficiency of the exhaust brake may also be reduced, necessarily requiring greater use of the service brake system that acts on the wheels of the vehicle.

Document US 2008/0207398 A1 describes a braking method and apparatus, also called "*retarder*", for a vehicle provided with an internal combustion engine, in particular a method and an apparatus for controlling a hydraulic motor used to actuate the cooling fan of the aforementioned internal combustion engine. The increased speed of the hydraulic motor and, therefore, of the cooling fan of the internal combustion engine is used to dissipate part of the kinetic energy of the vehicle in conditions of use going downhill. The method and the apparatus described in document US 2008/0207398 A1 foresee further possibilities of energy dissipation, like for example the variation of the displacement of pumps and motors of the hydrostatic transmission of the vehicle, in order to reduce the efficiency of the transmission system, keeping the transmission ratio unchanged.

Further braking devices according to the prior art are described, for example, in documents EP 2 466 018 A1, EP 1 308 359 A2, US 2010/137102 A1, WO 91/04879 A1 and US 2013/047955 A1.

Document DE 198 52 039 A1 discloses a vehicle provided with a hydrostatic drive and a hydraulic control apparatus.

The purpose of the present invention is therefore to make an auxiliary hydraulic braking device for a vehicle having an internal combustion engine, as well as a vehicle having an internal combustion engine provided with such an auxiliary hydraulic braking device, which are able to overcome the aforementioned drawbacks of the prior art in an extremely simple, cost-effective and particularly functional manner.

In detail, a purpose of the present invention is to make an auxiliary hydraulic braking device for a vehicle having an internal combustion engine that is effective also on engines with relatively small displacement and/or with a compression ratio that is not particularly high.

Another purpose of the present invention is to make an auxiliary hydraulic braking device for a vehicle having an internal combustion engine that can be actuated automatically as a function of the operating conditions of the vehicle.

A further purpose of the present invention is to make an auxiliary hydraulic braking device for a vehicle having an internal combustion engine that can be easily applied on conventional engines and vehicles without requiring substantial technical modifications.

These and other purposes according to the present invention are accomplished by making an auxiliary hydraulic braking device for a vehicle having an internal combustion engine, as well as a vehicle having an internal combustion engine provided with such an auxiliary hydraulic braking device, as outlined in claim 1.

Further characteristics of the invention are highlighted by the dependent claims, which are an integral part of the present description.

The characteristics and advantages of an auxiliary hydraulic braking device for a vehicle having an internal combustion engine according to the present invention will become clearer from the following description, given as an example and not for limiting purposes, referring to the attached schematic drawings, in which:

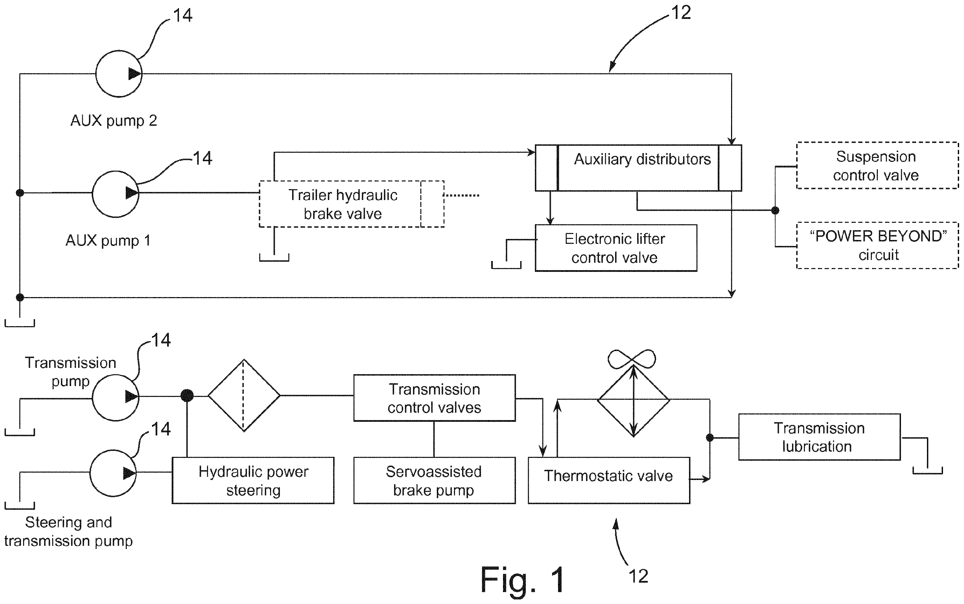

figure 1 is a block diagram of a hydraulic circuit for a vehicle having an internal combustion engine made according to the prior art;

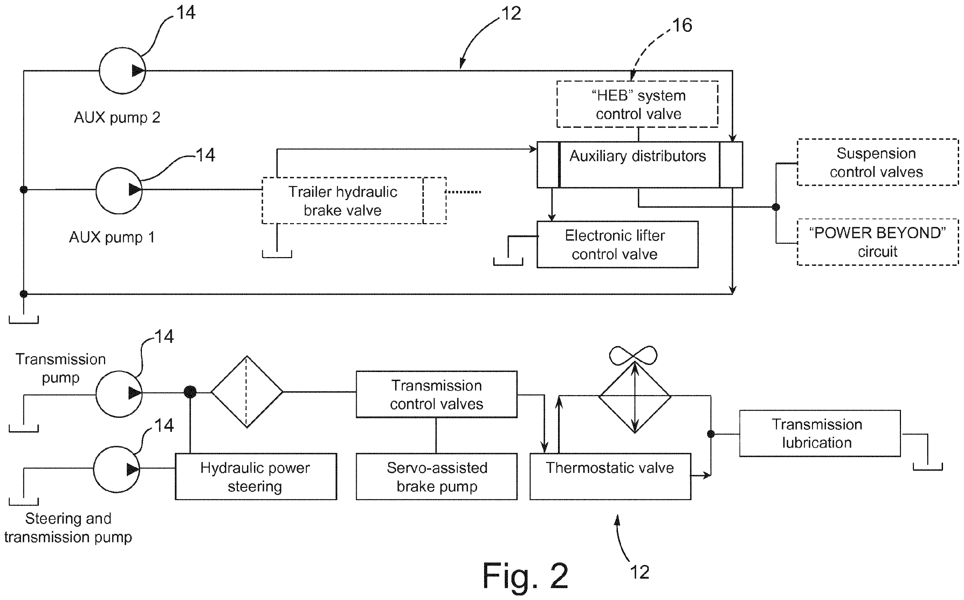

figure 2 is a block diagram of a hydraulic circuit for a vehicle having an internal combustion engine made according to the present invention;
figure 3A is a first hydraulic operating scheme of an embodiment of the auxiliary hydraulic braking device for an internal combustion engine according to the present invention;
figure 3B is a second hydraulic operating scheme of an embodiment of the auxiliary hydraulic braking device for an internal combustion engine according to the present invention;
figure 4 is a perspective view of the auxiliary hydraulic braking device for an internal combustion engine inserted in the hydraulic diagrams of figures 3A and 3B;

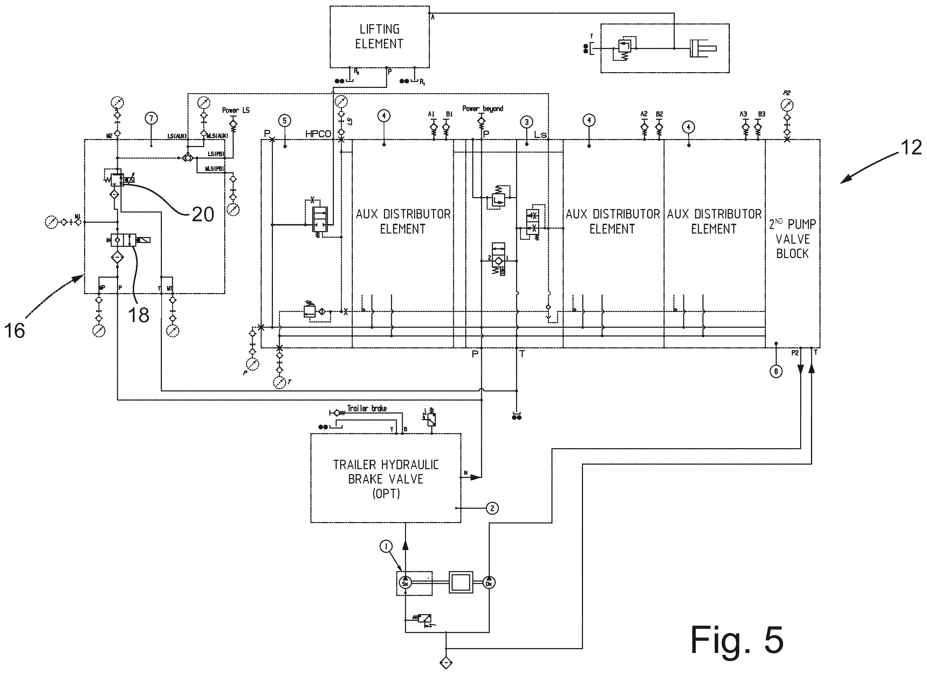

figure 5 is a diagram of a specific hydraulic circuit (auxiliary hydraulic circuit) of a vehicle having an internal combustion engine that uses an auxiliary hydraulic braking device according to the present invention;

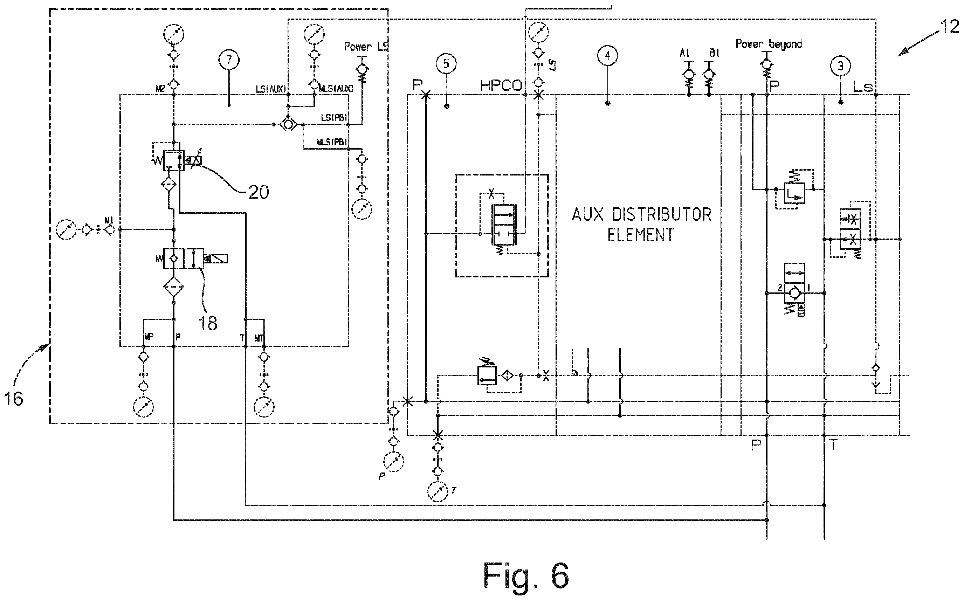

figure 6 is a partial view of the hydraulic scheme of figure 5, in which the auxiliary hydraulic braking device according to the present invention is highlighted;

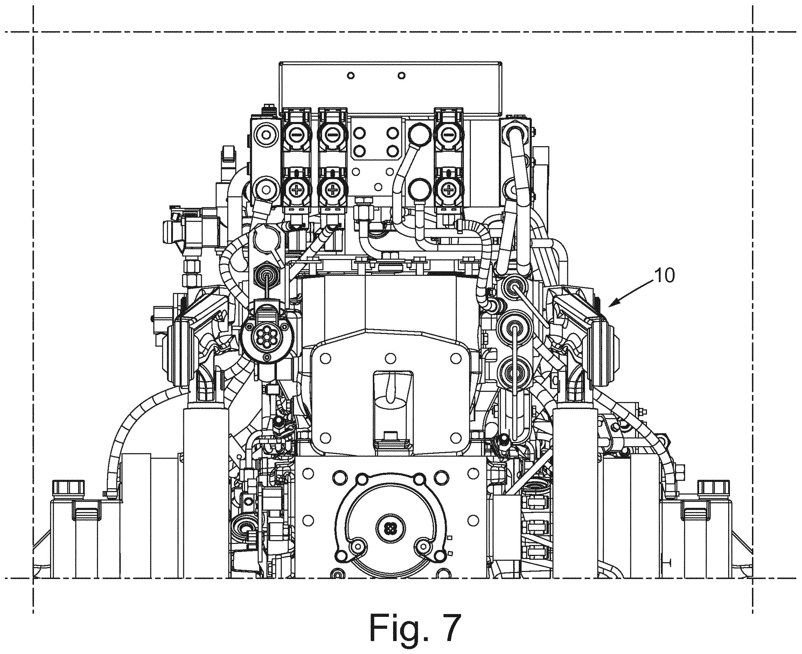

figure 7 is a perspective view showing the auxiliary hydraulic braking device, with the physical components indicated in the hydraulic schemes of figures 6 and 7, on a generic vehicle equipped with internal combustion engine;

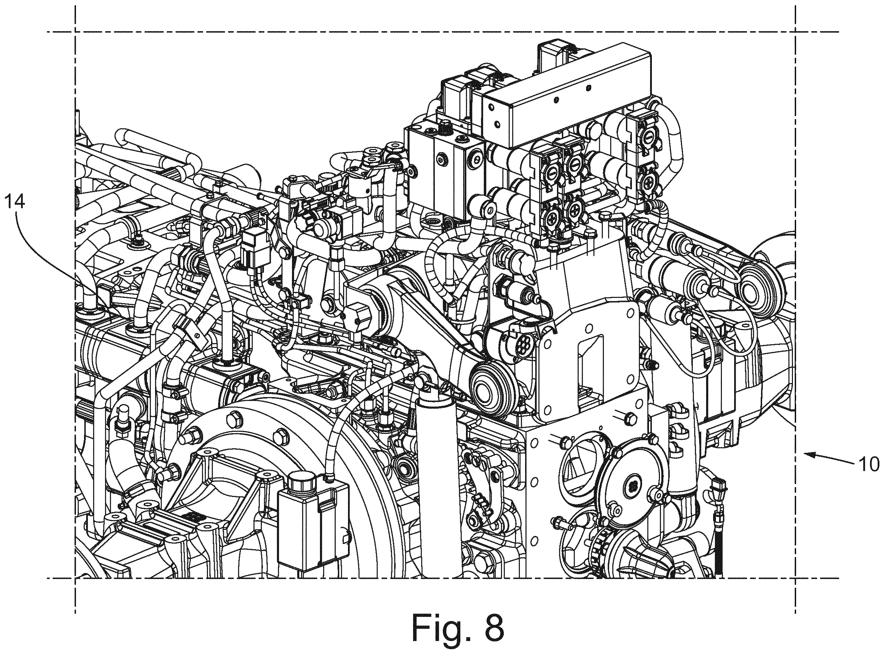

figure 8 is another perspective view showing the auxiliary hydraulic braking device, with the physical components indicated in the hydraulic schemes of figure 6 and 7, on a generic vehicle equipped with an internal combustion engine;

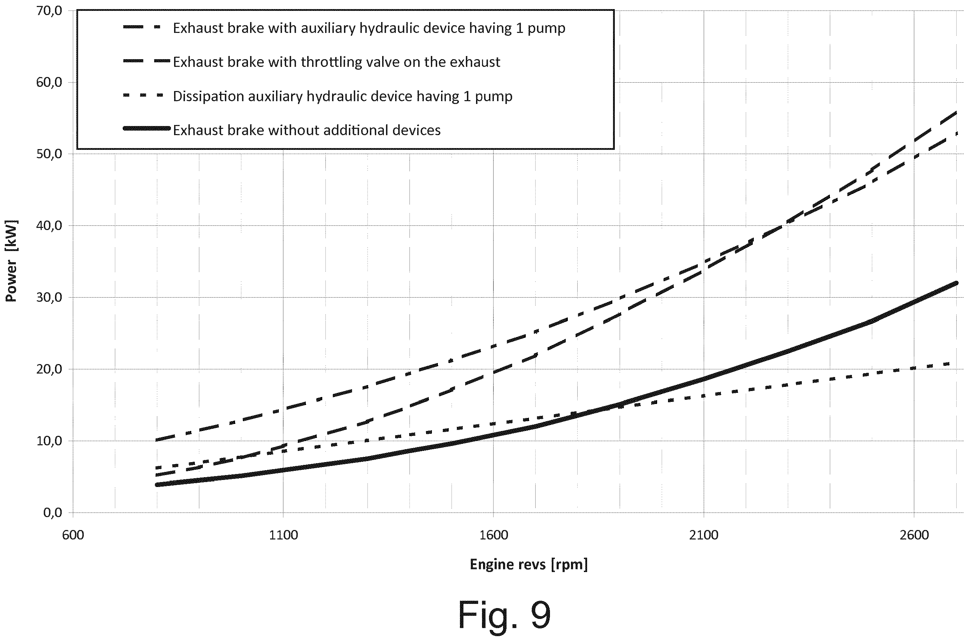

figure 9 is a diagram that shows the efficiency of the auxiliary hydraulic braking device according to the present invention, i.e. the braking power as a function of the rotation speed of a generic internal combustion engine;

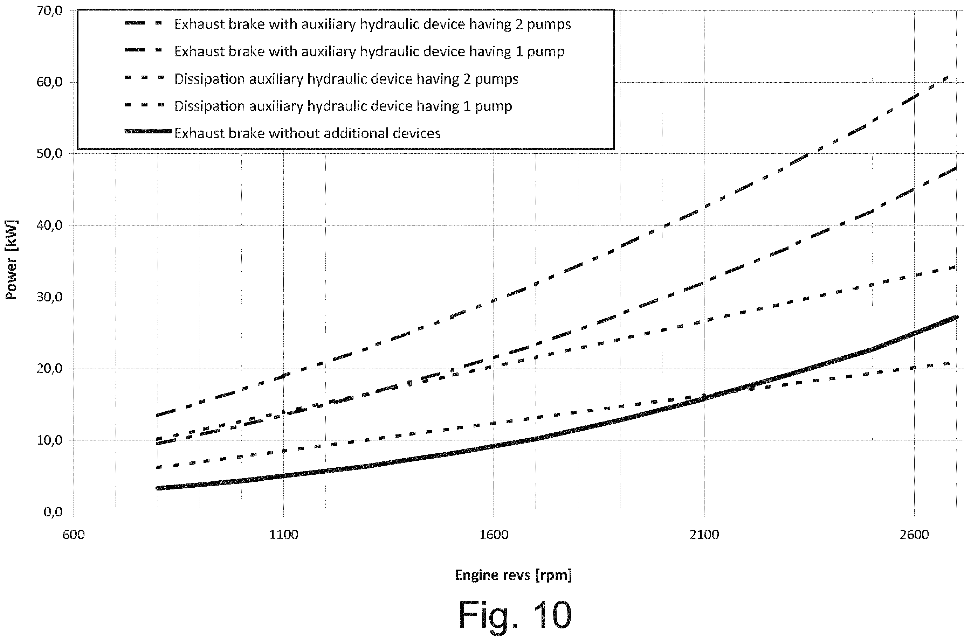

figure 10 is another diagram that shows the efficiency of the auxiliary hydraulic braking device according to the present invention, i.e. the braking power as a function of the rotation speed of a generic internal combustion engine, also considering the use of many hydraulic pumps;

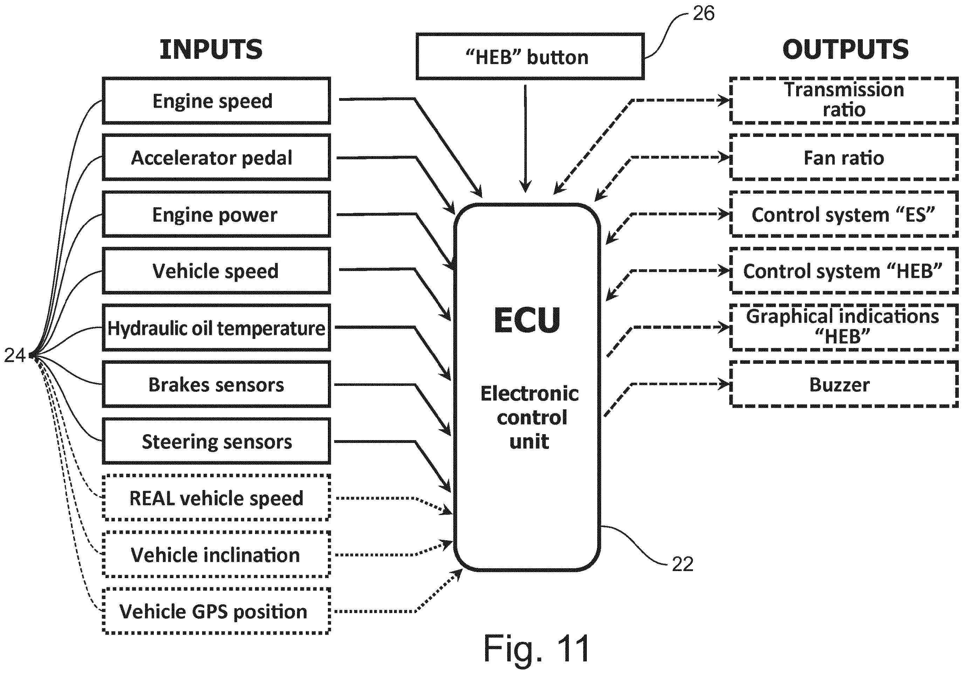

figure 11 is a diagram that shows the physical magnitudes and the various functional components of a vehicle having an internal combustion engine that are integrated with the auxiliary hydraulic braking device according to the present invention;
figure 12 is a diagram that shows the operation of the auxiliary hydraulic braking device according to the present invention as a function of the oil temperature of the hydraulic circuit of a generic vehicle equipped with an internal combustion engine;
figure 13 is a diagram that shows the operation of the auxiliary hydraulic braking device according to the present invention as a function of the vehicle steering angle on which such an auxiliary hydraulic braking device is mounted; and

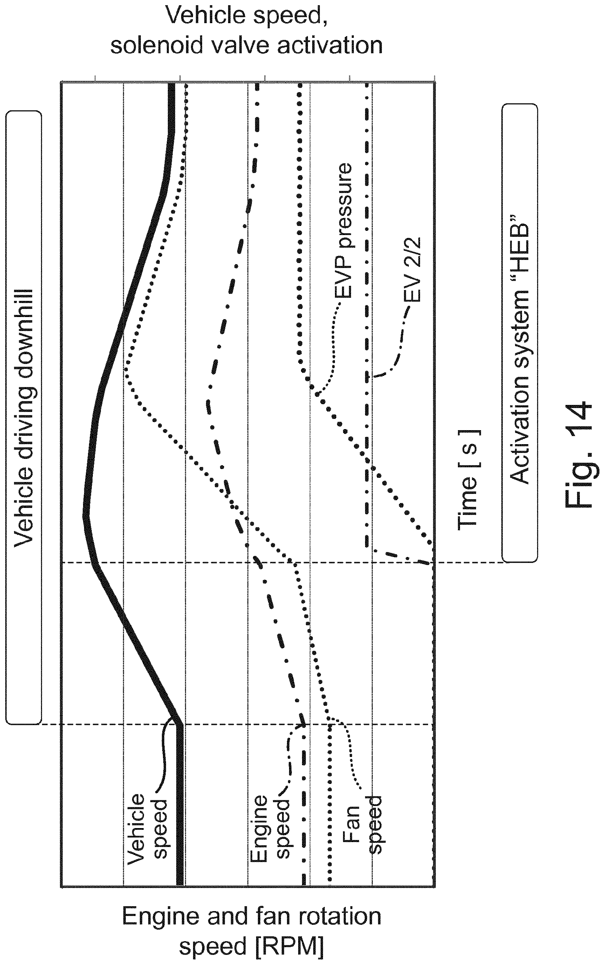

figure 14 is a diagram that shows the shape of the curves regarding the speed of the vehicle, the rotation speed of the engine and the rotation speed of the cooling fan, in the case of going downhill, as a function of time and of the activation of the auxiliary hydraulic braking device according to the present invention.

With reference to the figures, some essential components of a generic vehicle having an internal combustion engine, in particular but not exclusively an agricultural tractor, are shown. The vehicle comprises, in a *per sé* known way, an internal combustion engine 10 and one or more hydraulic control circuits 12 operatively connected to such an internal combustion engine 10.

Each hydraulic circuit 12 is configured for controlling one or more devices of the vehicle, like for example the transmission, the steering, the brakes, etc., and comprises at least one hydraulic pump 14 capable of transforming the mechanical energy drawn from the internal combustion engine 10 into hydraulic energy. In other words, in order to be able to operate correctly and consequently actuate the devices connected to it through the relative hydraulic circuit 12, each hydraulic pump 14 absorbs a variable amount of the drive torque delivered by the internal combustion engine 10. In the case in which the vehicle is an agricultural tractor, one of the hydraulic circuits 12 can consist for example of the auxiliary hydraulic circuit, capable of controlling the accessories and the service devices of the trailers that can be hooked to the agricultural tractor itself.

The hydraulic pump 14 can be connected to the internal combustion engine 10 directly or indirectly through a transmission. The hydraulic pump 14 for the auxiliary hydraulic braking device could also be mechanically connected, through possible suitable transmission, to the wheels of the vehicle. In order for the braking action of the device to be produced on the vehicle, it is clearly necessary for the transmission between the wheels of the vehicle and the hydraulic pump 14 to be inserted.

According to the invention, at least one of the hydraulic circuits 12 of the vehicle is provided with at least one block valve group 16 capable of controlling the pressure exerted by the hydraulic pump 14 on the fluid circulating in the hydraulic circuit 12 itself. The control of the pressure exerted by the hydraulic pump 14 on the fluid circulating in the hydraulic circuit 12 directly regulates the torque absorbed by the hydraulic pump 14. During the use of the auxiliary hydraulic braking device with the vehicle travelling downhill, a part of the kinetic energy of the vehicle is converted initially into hydraulic energy, through the pressure control on the hydraulic pump 14 by using a hydraulic throttling valve, and then into heat energy. Part of this hydraulic energy could also be suitably "stored" by suitable components or systems provided on board of the vehicle, in order to be able to be reused later. Such a possibility makes it possible to increase the overall energy efficiency of the vehicle.

The heat energy produced during the braking action is dissipated by at least one heat exchanger provided on board of the vehicle and operatively connected to the hydraulic circuit 12. Such a heat exchanger can be installed on the same hydraulic circuit 12 used for the operation of the auxiliary hydraulic braking device, or on another hydraulic circuit that shares the same fluid. In order to optimise the heat exchange, the hydraulic pump 14 and, more precisely, the relative hydraulic throttling valve can also be provided with a specific cooling circuit that uses a cooling fluid of liquid or gaseous nature.

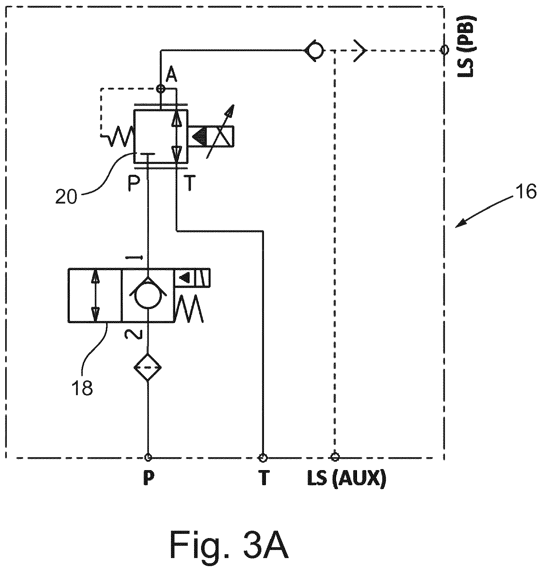

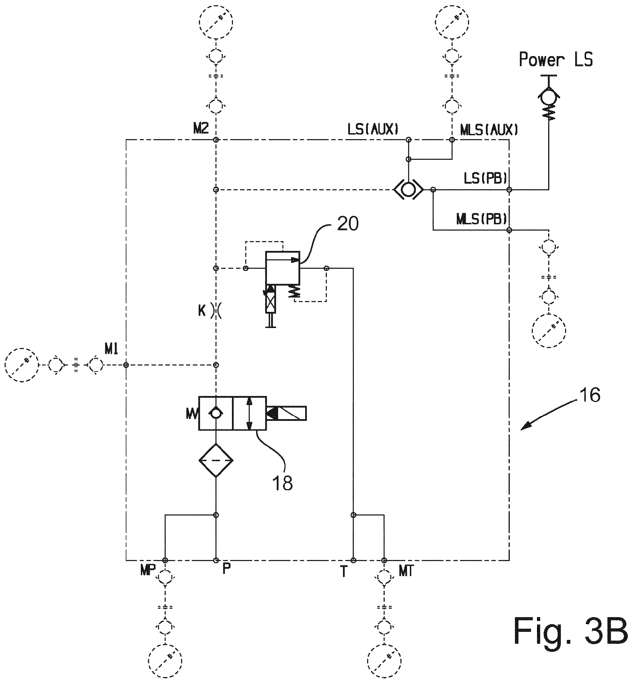

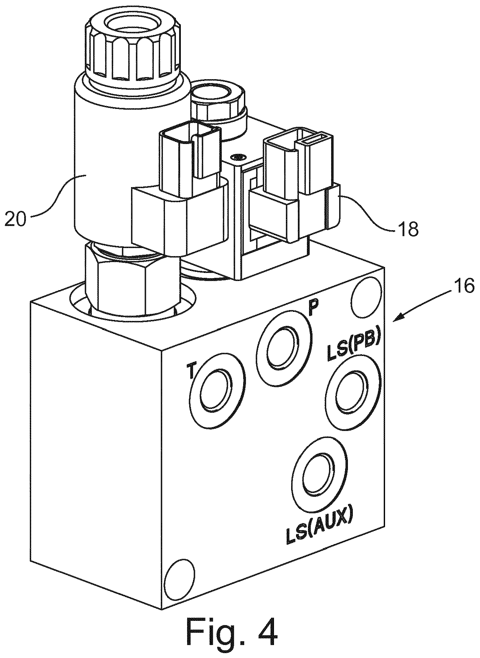

In detail, as shown in figures 3A, 3B and 4, the block valve group 16 can consist of a first valve 18 with electromagnetic control or with solenoid, capable of activating and deactivating the block valve group 16 itself. When the first valve 18 with electromagnetic control or with solenoid is not activated by any electrical current, the block valve group 16 is completely inactive and the relative hydraulic circuit 12 is fully efficient in controlling the respective devices. In such an operating condition, therefore, the value of the braking action exerted by the auxiliary hydraulic braking device is equal to zero.

The block valve group 16 also comprises a second pressure control proportional valve 20 with electromagnetic control or with solenoid, capable of controlling the pressure exerted by the hydraulic pump 14 on the fluid circulating in the hydraulic circuit 12 in a proportional manner, to consequently regulate the torque absorbed by the hydraulic pump 14, i.e. the braking torque. The second pressure control proportional valve 20 is activated when the first valve 18 with electromagnetic control or solenoid is in turn activated.

It is important to specify that the hydraulic scheme of the block valve group 16 described up to now and illustrated in figures 3A and 3B refers to an example of a hydraulic circuit 12 equipped with hydraulic pump 14 with fixed displacement. The block valve group 16, with suitable provisions, can also be used on hydraulic circuits equipped with pumps with variable displacement. In hydraulic circuits equipped with pumps with variable displacement the control of the torque absorbed by the hydraulic pump 14, which is equivalent to the braking torque of the auxiliary hydraulic braking device, takes place by proportionally varying not only the pressure (like in circuits with pumps with fixed displacement) but also the displacement of the hydraulic pump 14 itself with suitable control valves. Moreover, the block valve group 16 has been defined as a single group to highlight the ease of implementation in a pre-existing hydraulic circuit 12. It should be understood that it is possible to integrate the hydraulic components of such a block valve group 16 in the distributors and in the valve groups present in the hydraulic circuit 12 of the vehicle.

The auxiliary hydraulic braking device consisting of the block valve group 16 can be operatively connected to the electronic control unit (ECU) 22 normally provided on board of the vehicle. The electronic control unit 22 is capable of managing and/or calculating a plurality of information and parameters regarding the operation of the on board vehicle devices. Such information and parameters are detected by a plurality of sensors 24 present on board of the vehicle and are thus sent to the electronic control unit 22 through corresponding communication channels. The information and parameters can consist, for example, of the rotation speed of the internal combustion engine 10, the position of the accelerator, the power delivered by the internal combustion engine 10, the speed of the vehicle, the hydraulic oil temperature, the operating conditions of the service brake system, of the transmission, of the steering, etc.

The auxiliary hydraulic braking device consisting of the block valve group 16 can thus be activated manually by the driver of the vehicle, by actuating a corresponding control switch 26, or it can be activated automatically by the electronic control unit 22, according to the operating conditions of the vehicle obtained from the information provided by the sensors 24. After the activation of the system, the electronic control unit 22 starts the control and the activations of the solenoid valves 18 and 20 of the auxiliary hydraulic braking device.

While the vehicle is going downhill only a part of the kinetic energy of the vehicle itself is dissipated by the braking force generated by the internal combustion engine 10, while the remaining part of kinetic energy is managed by the auxiliary hydraulic braking device consisting of the block valve group 16. In other words, through the hydraulic pump 14 connected to the internal combustion engine 10, which generates a controlled variation of the pressure of the fluid of the hydraulic circuit 12, a resistant torque is applied to the internal combustion engine 10 itself in the form of hydraulic energy. This hydraulic energy is converted into thermal energy or heat (there is an increase in oil temperature) and, in the final step, the heat generated is dissipated through the heat exchanger operatively connected to the hydraulic circuit 12. The energy transformation sequence is therefore as follows:
1. kinetic energy of the vehicle;
2. mechanical energy;
3. hydraulic energy;
4. thermal energy.

The auxiliary braking procedure thus comprises a series of other actions to be carried out on the systems of the vehicle to optimise the functionality thereof, like for example the variation of the transmission ratio and the variation of the speed of the cooling fan, which can be of any type known in the state of the art.

For example, when going downhill and with a trailer hooked to the vehicle, the rotation speed of the internal combustion engine 10 increases without any braking action taking place on the vehicle and without the operator requesting an increase in rotation speed of the engine. In such an operating condition the electronic control unit 22 can reduce the transmission ratio, activate and modulate the auxiliary hydraulic braking device consisting of the block valve group 16 and activate the cooling fan of the internal combustion engine 10 to the maximum speed to dissipate energy.

The control switch 26 can have different forms, positions and methods of actuation. For example, the control switch 26 can consist of a button on the control console of the vehicle, a manual control lever rather than a pedal button and can even be integrated in controls already present on the vehicle itself, like for example the brake pedals or button for activating the "*cruise speed control*" function.

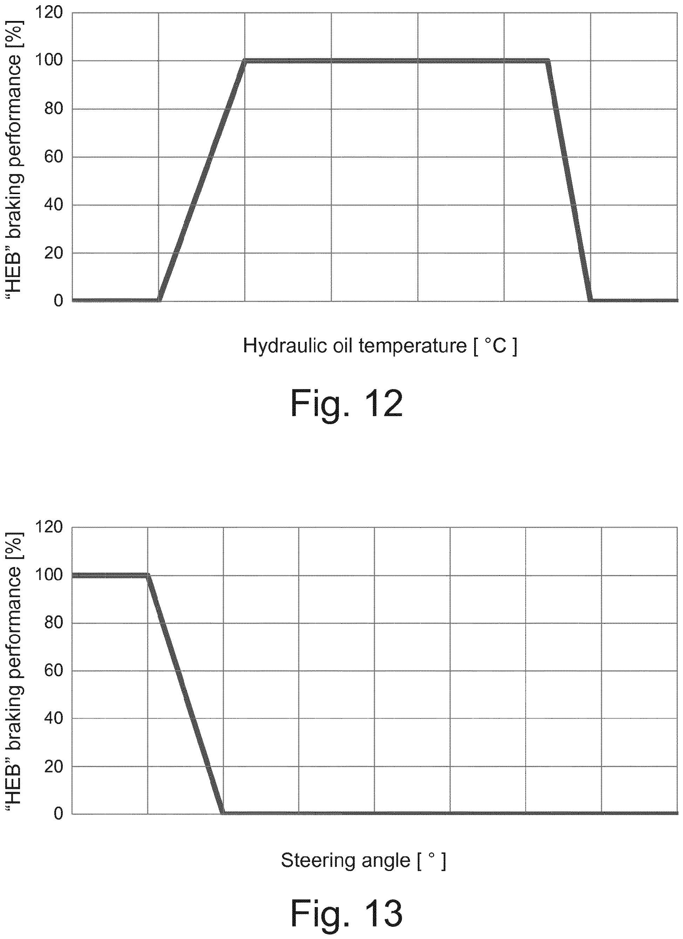

Figures 12 and 13 show respective diagrams that show the operation of the auxiliary hydraulic braking device according to the present invention as a function of some specific parameters. For example, with reference to figure 12, the hydraulic oil temperature is a parameter constantly controlled by the electronic control unit 22. The activation of the block valve group 16 and the relative operating conditions can be managed as a function of the hydraulic oil temperature to maximise the braking action, at the same time protecting the components of the hydraulic circuit 12 from possible malfunctions.

With reference to figure 13, the steering angle and the operating conditions of the service brake system of the vehicle are also parameters constantly controlled by the electronic control unit 22. The activation of the block valve group 16 and the relative operating conditions can be managed as a function of the steering angle to increase the stability of the vehicle, in particular when such a vehicle has to tow a trailer. In addition, once a predetermined steering angle has been reached, the electronic control unit 22 can also activate an acoustic and/or optical warning device to get the driver of the vehicle to actuate the service brake system, so as to obtain a braking force both on the vehicle, and on the relative trailer and increase the stability of the entire "train" (vehicle plus trailer).

In general, the auxiliary hydraulic braking device consisting of the block valve group 16 operates in the following way. Before the activation of the auxiliary hydraulic braking device the electronic control unit 22 constantly carries out the control of the information and of the parameters coming from the corresponding sensors 24, possibly identifying the operating conditions of the vehicle suitable for the activation of such an auxiliary hydraulic braking device. These operating conditions can comprise:
- an increase, not determined by the driver, in the rotation speed of the internal combustion engine 10 and in the speed of the vehicle;
- attaining a predefined position of the accelerator of the internal combustion engine 10;
- a reduction of the power supplied by the internal combustion engine 10 below a minimum predefined value;
- attaining a predefined field of the lubricant oil temperature of the internal combustion engine 10;
- attaining a predefined operating condition of the service brake system of the vehicle;
- attaining a predefined field of the vehicle steering angle.

If one or more of the operating conditions of the vehicle identified by the sensors 24 are met (preferably all of the aforementioned operating conditions of the vehicle identified by the sensors 24 must be met), the electronic control unit 22 activates the auxiliary hydraulic braking device and simultaneously actuates one or more determined on board vehicle devices to make the operation of such an auxiliary hydraulic braking device efficient. In particular, the electronic control unit 22:
- increases the rotation speed of the cooling fan of the internal combustion engine 10, both to improve the cooling conditions, dissipating the maximum possible amount of energy, and to further increase the braking action of the internal combustion engine 10, due to the drive torque absorbed by the cooling fan;
- reduces the transmission ratio, in a progressive manner in the case of continuous variable transmission (CVT), to keep the rotation speed of the internal combustion engine 10 within a range comprised between that of the torque and that of the maximum power;
- disables the energy saving system (when present) of the vehicle. The energy saving system mounted on the vehicle can consist, for example, of a hydraulic pump bypass system 14 mounted on the relative hydraulic circuit 12.

The activation of the auxiliary hydraulic braking device takes place by initially energising the first valve 18 with electromagnetic control or with solenoid and then energising, with a modulated current, the second pressure control proportional valve 20.

The electronic control unit 22 keeps the auxiliary hydraulic braking device, the information and the parameters coming from the sensors 24 constantly under control for the entire period of time in which such an auxiliary hydraulic braking device remains active, signalling possible errors and/or malfunctions to the driver of the vehicle through determined acoustic and/or optical signal devices of the vehicle itself. In particular, the electronic control unit 22 constantly controls the advancement speed of the vehicle to keep it within a predetermined speed range, calculated in the activation time instant of the auxiliary hydraulic braking device. The auxiliary hydraulic braking device according to the present invention thus operates in an analogous way to a "*cruise speed control*".

The errors and/or malfunctions signalled to the driver of the vehicle can consist of:
- generic malfunctions of the vehicle, which may or may not be linked to a failure of the auxiliary hydraulic braking device;
- errors in the acquisition of the information and parameters coming from the sensors 24;
- exceeding a predetermined value of the rotation speed of the internal combustion engine 10;
- reduction in performance of the auxiliary hydraulic braking device.

As well as signalling errors, the electronic control unit 22 can generate specific warnings for the driver of the vehicle for the prompt actuation of the service brake system. This action can be required in the case in which situations potentially critical for the stability of the vehicle and/or of its possible trailer are identified.

For example, while the vehicle is going downhill towing a trailer, the stability of the "train" in the presence of a particularly laden and heavy trailer can be compromised if there is no perfect alignment between the vehicle and the trailer during braking of just the towing vehicle. For this reason, the electronic control unit 22 carries out constant checks on the steering angle and sends alert signals for the activation of the service brake system before potentially critical situations occur. The activation of the service brake system is indeed essential to obtain the braking of the trailer, which is the condition that contributes most to maintaining the stability of the "train".

It is important to emphasise the fact that the braking action of the auxiliary hydraulic braking device can also be obtained in different conditions from the vehicle going downhill. The braking action can indeed also be obtained in the case of a need to slow down the vehicle (or rather the "train" consisting of vehicle plus trailer) on a flat road, considering for example slowing down from a high speed that, with high masses, produces a low deceleration without additional braking action.

It has thus been seen that the auxiliary hydraulic braking device for a vehicle having an internal combustion engine according to the present invention achieves the purposes outlined earlier. In particular, such an auxiliary hydraulic braking device increases safety when the vehicle is going downhill, actively controlling it and where necessary generating alert and danger signals for the driver.

The auxiliary hydraulic braking device for a vehicle according to the present invention generates a variable braking torque to keep the speed constant and keep the vehicle controllable. Such an auxiliary hydraulic braking device does not generate any type of friction between the components of the vehicle, thus preserving them from wearing.

The auxiliary hydraulic braking device for a vehicle having an internal combustion engine of the present invention thus conceived can in any case undergo numerous modifications and variants, all of which are covered by the same inventive concept; moreover, all of the details can be replaced with technically equivalent elements. In practice, the materials used, as well as the shapes and sizes, can be whatever according to the technical requirements.

For example, the auxiliary hydraulic braking device for a vehicle having an internal combustion engine of the present invention can be implemented with the addition of further sensors and relative signals. Such sensors and relative signals can comprise:
- a radar or other device capable of detecting the real speed of the vehicle, in order to be able to calculate further parameters like sliding of the tyres. The parameter of sliding of the tyres can be used to limit the level of braking torque of the auxiliary hydraulic braking device in conditions of poor grip on the ground, limiting the sliding of the tyres to a predetermined maximum value. Such a functionality makes it possible to optimise performances and increase safety for the control of the vehicle, as occurs for braking systems equipped with anti-block device (ABS);
- an inclinometer capable of precisely indicating the degree of inclination of the vehicle when traveling on non-flat terrain;
- a positioning device based on a generic global navigation satellite system (GNSS or GPS), capable of periodically providing the absolute geographical position of the vehicle on the planet;
- an automatic activation device of the service brake system and/or emergency device, if the specific technical product legislation, whether national, European or international, does not expressly prohibit it.

The scope of protection of the invention is therefore defined by the attached claims.

## Claims

1. Vehicle comprising:
- an internal combustion engine (10);
- one or more hydraulic control circuits (12) operatively connected to said internal combustion engine (10), each hydraulic circuit (12) being configured for controlling one or more devices of the vehicle and comprising at least one hydraulic pump (14) capable of transforming the mechanical energy drawn from the internal combustion engine (10), or from the transmission connected to the wheels of the vehicle, into hydraulic energy, wherein said mechanical energy consists of a variable amount of the drive torque absorbed by the hydraulic pump (14) from the internal combustion engine (10), or from the transmission connected to the wheels of the vehicle;
- an electronic control unit (22) capable of managing and/or calculating a plurality of information and parameters regarding the operation of the on board vehicle devices, said information and said parameters being detected by a plurality of sensors (24) present on board of the vehicle and thus being sent to the electronic control unit (22) through corresponding communication channels;
**characterised in that** at least one of the hydraulic circuits (12) is provided with:
- at least one block valve group (16) comprising:
- a first valve (18) with electromagnetic control capable of activating and deactivating said block valve group (16) so that, when electrical current does not pass through said first valve (18), the block valve group (16) is fully inactive, the relative hydraulic circuit (12) is fully efficient at controlling respective devices and the value of the braking action exerted by the internal combustion engine (10) as a function of the variation of the relative drive torque is equivalent to zero; and
- a second pressure control proportional valve (20) with electromagnetic control, capable of proportionally controlling the pressure exerted by the hydraulic pump (14) on the fluid circulating in the hydraulic circuit (12) for thus regulating the torque absorbed by the hydraulic pump (14), said second pressure control proportional valve (20) being activated when the first valve (18) is activated in turn, said at least one block valve group (16) being capable of converting a part of the kinetic energy of the vehicle into hydraulic energy, through the pressure control exerted by the hydraulic pump (14) on the fluid circulating in said hydraulic circuit (12), wherein the controlled variation of the pressure exerted by the second pressure control proportional valve (20) of the hydraulic pump (14) on the fluid circulating in said hydraulic circuit (12) generates an amount of resistant torque applied to the internal combustion engine (10), or to the transmission connected to the wheels of the vehicle, converting said hydraulic energy into heat energy and thus determining a braking action of the vehicle; and
- at least one heat exchanger operatively connected to the hydraulic circuit (12), capable of dissipating the heat energy generated by the braking action caused by the block valve group (16),
wherein a cooling fan is operatively connected to said electronic control unit (22) to increase its rotation speed simultaneously with the activation of the auxiliary hydraulic braking device.

2. Vehicle according to claim 1, **characterised in that** the block valve group (16) is operatively connected to the electronic control unit (22) and it is automatically activated by said electronic control unit (22) according to the operating conditions of the vehicle obtained from the information provided by the sensors (24).

3. Vehicle according to claim 1 or 2, **characterised in that** the hydraulic pump (14) is provided with a cooling circuit that uses a cooling fluid of a liquid or gaseous nature.

4. Method for the auxiliary braking of a vehicle with internal combustion engine (10) according to any one of the claims from 1 to 3, **characterised in that** it comprises the following steps:
- controlling, through the electronic control unit (22), the information and parameters obtained from the corresponding sensors (24), possibly identifying the operating conditions of the vehicle suitable for the activation of the auxiliary hydraulic braking device consisting of the block valve group (16);
- activating, through the electronic control unit (22) and if one or more of the operating conditions of the vehicle identified by the sensors (24) are met, the auxiliary hydraulic braking device and simultaneously actuating one or more determined on-board vehicle devices for making the operation of said auxiliary hydraulic braking device efficient,
wherein the step of activating the auxiliary hydraulic braking device occurs by initially energising the first valve (18) with electromagnetic control of the block valve group (16) and thus energising, with modulated current, the second pressure control proportional valve (20) of said block valve group (16),
and wherein the step of simultaneously actuating one or more determined on-board vehicle devices comprises increasing the rotation speed of the cooling fan of the internal combustion engine (10), both for improving the cooling conditions, dissipating the maximum possible amount of energy, and for further increasing the braking action of the internal combustion engine (10), due to the drive torque absorbed by said cooling fan;
- constantly controlling, through the electronic control unit (22), the auxiliary hydraulic braking device, the information and the parameters obtained from the sensors (24) over the entire period of time wherein said auxiliary hydraulic braking device is active, indicating any errors and/or malfunctions to the driver of the vehicle through predetermined acoustic and/or optical signal devices of said vehicle.

5. Method according to claim 4, **characterised in that** the operating conditions of the vehicle suitable for the activation of the auxiliary hydraulic braking device consisting of the block valve group (16) comprise:
- an increase, not determined by the driver, of the rotation speed of the internal combustion engine (10) and of the speed of the vehicle;
- the attainment of a predefined position of the accelerator of the internal combustion engine (10);
- a reduction of the power supplied by the internal combustion engine (10) below a minimum predefined value;
- the attainment of a predefined field of the oil temperature of the hydraulic circuit (12);
- the attainment of a predefined operating condition of the service brake system of the vehicle; and
- the attainment of a predefined field of the vehicle steering angle.

6. Method according to claim 4 or 5, **characterised in that**, during the activation step of the auxiliary hydraulic braking device, the electronic control unit (22) :
- reduces the transmission ratio to maintain the rotation speed of the internal combustion engine (10) within a predefined range; and
- disables an energy saving system consisting of a hydraulic pump bypass system (14) mounted on the respective hydraulic circuit (12).

7. Method according to any one of the claims from 4 to 6, **characterised in that**, in the step of controlling the auxiliary hydraulic braking device, the electronic control unit (22) constantly controls the advancement speed of the vehicle so as to keep it approximately around a predefined speed value, calculated in the activation time instant of the auxiliary hydraulic braking device or defined by the user through a "*cruise speed control*" function.

8. Method according to any one of the claims from 4 to 7, **characterised in that**, in the step of controlling the auxiliary hydraulic braking device and in case of detection of situations potentially critical for the stability of the vehicle and/or of a possible trailer thereof, the electronic control unit (22) generates specific warning for the driver of the vehicle for the prompt actuation of the service brake system.

## Patentansprüche

1. Fahrzeug, umfassend:
- eine Brennkraftmaschine (10);
- eine oder mehrere Hydrauliksteuerschaltungen (12),
die operabel mit der Brennkraftmaschine (10) verbunden sind, wobei jede Hydraulikschaltung (12) konfiguriert ist, eine oder mehrere Vorrichtungen des Fahrzeugs zu steuern und mindestens eine Hydraulikpumpe (14) zu umfassen, die dazu in der Lage ist, die mechanische Energie, die von der Brennkraftmaschine (10) oder von dem Getriebe, das mit den Rädern des Fahrzeugs verbunden ist, bezogen wird, in hydraulische Energie umzuwandeln, wobei die mechanische Energie aus einer variablen Anzahl des Drehmoments besteht, das von der Hydraulikpumpe (14) aus der Brennkraftmaschine (10) oder aus dem Getriebe, das mit den Rädern des Fahrzeugs verbunden ist, absorbiert wird;
- eine elektronische Steuereinheit (22), die dazu in der Lage ist eine Vielzahl von Informationen und Parametern in Bezug auf den Betrieb der eingebauten Fahrzeugbordvorrichtungen zu verwalten und/oder zu berechnen, wobei die Informationen und die Parameter von einer Vielzahl von Sensoren (24) detektiert werden, die an Bord des Fahrzeugs vorhanden sind und somit über die entsprechenden Kommunikationskanäle an die elektronische Steuereinheit (22) gesendet werden;
**dadurch gekennzeichnet, dass** mindestens eine der Hydraulikschaltungen (12) mit Folgendem ausgestattet ist:
- mindestens einer Blockventilgruppe (16), umfassend:
- ein erstes Ventil (18) mit elektromagnetischer Steuerung, das dazu in der Lage ist, die Blockventilgruppe (16) zu aktivieren und zu deaktivieren, so dass, wenn kein elektrischer Strom durch das erste Ventil (18) fließt, die Blockventilgruppe (16) komplett inaktiv ist, die relative Hydraulikschaltung (12) komplett effizient beim Steuern von entsprechenden Vorrichtungen ist und der Wert der Bremswirkung, die von der Brennkraftmaschine (10) ausgeübt wird, als Funktion der Variation des relativen Antriebsdrehmoments gleich Null ist; und
- ein zweites Drucksteuerungsproportionsventil (20) mit elektromagnetischer Steuerung, das dazu in der Lage ist, den Druck, der von der Hydraulikpumpe (14) auf das Fluid ausgeübt wird, das in der Hydraulikschaltung (12) zirkuliert, proportional zu steuern, um dadurch das Drehmoment, das von der Hydraulikpumpe (14) absorbiert wird, zu regulieren, wobei das zweite Drucksteuerungsporportionsventil (20) aktiviert wird, wenn wiederum das erste Ventil (18) aktiviert ist, wobei mindestens eine Blockventilgruppe (16) dazu in der Lage ist, einen Teil der kinetischen Energie des Fahrzeugs durch die Drucksteuerung, die von der Hydraulikpumpe (14) auf das Fluid ausgeübt wird, das in der Hydraulikschaltung (12) zirkuliert, in hydraulische Energie umzuwandeln, wobei die gesteuerte Variation des Drucks, der von dem zweiten Drucksteuerungsproportionsventil (20) der Hydraulikpumpe (14) auf das Fluid ausgeübt wird, das in der Hydraulikschaltung (12) zirkuliert, ein Ausmaß an Widerstandsdrehmoment erzeugt, das auf die Brennkraftmaschine (10) oder auf das Getriebe, das mit den Rädern des Fahrzeugs verbunden ist, angewendet wird, wodurch die hydraulische Energie in Wärmeenergie umgewandelt wird und somit eine Bremswirkung des Fahrzeugs bestimmt; und
- mindestens einen Wärmetauscher, der operabel mit der Hydraulikschaltung (12) verbunden ist, der dazu in der Lage ist, die Wärmeenergie, die durch die Bremswirkung erzeugt wird, die durch die Blockventilgruppe (16) verursacht wird, abzuführen, wobei ein Kühlerlüfter operabel mit der elektronischen Steuereinheit (22) verbunden ist, um dessen Drehzahl gleichzeitig mit der Aktivierung der hydraulischen Bremshilfevorrichtung zu erhöhen.

2. Fahrzeug nach Anspruch 1, **dadurch gekennzeichnet, dass** die Blockventilgruppe (16) operabel mit der elektronischen Steuereinheit (22) verbunden ist und automatisch von der elektronischen Steuereinheit (22) je nach den Betriebsbedingungen des Fahrzeugs aktiviert wird, die aus den Informationen erhalten wurden, die von den Sensoren (24) bereitgestellt wurden.

3. Fahrzeug nach Anspruch 1 oder 2, **dadurch gekennzeichnet, dass** die Hydraulikpumpe (14) mit einer Kühlschaltung versehen ist, die ein Kühlfluid aus einer flüssigen oder gasförmigen Art verwendet.

4. Verfahren zur Bremshilfe eines Fahrzeugs mit Brennkraftmaschine (10) nach einem der Ansprüche 1 bis 3, **dadurch gekennzeichnet, dass** es
die folgenden Schritte umfasst:
- Steuern durch die elektronische Steuereinheit (22) der Informationen und Parameter, die von den entsprechenden Sensoren (24) erhalten wurden, wodurch möglicherweise die Betriebsbedingungen des Fahrzeugs identifiziert werden, die für die Aktivierung der hydraulischen Bremshilfevorrichtung, bestehend aus der Blockventilgruppe (16), geeignet sind;
- Aktivieren, durch die elektronische Steuereinheit (22) und falls eine oder mehrere der Betriebsbedingungen des Fahrzeugs, die von den Sensoren (24) identifiziert wurden, eingehalten werden, der hydraulischen Bremshilfevorrichtung und gleichzeitiges Aktivieren einer oder mehrerer bestimmter eingebauter Fahrzeugbordvorrichtungen zur Effizienzsicherung des Betriebs der hydraulischen Bremshilfevorrichtung,
wobei der Schritt des Aktivierens der hydraulischen Bremshilfevorrichtung durch anfängliches Erregen des ersten Ventils (18) mit elektromagnetischer Steuerung der Blockventilgruppe (16) und dadurch Erregen des zweiten Drucksteuerungsproportionsventils (20) der Blockventilgruppe (16) mit moduliertem Strom erfolgt,
und wobei der Schritt des gleichzeitigen Betätigens einer oder mehrerer bestimmter eingebauter Fahrzeugbordvorrichtungen das Erhöhen der Drehzahl des Kühlerlüfters der Brennkraftmaschine (10) umfasst, zum Verbessern der Kühlbedingungen, zum Abführen der größtmöglichen Menge an Energie sowie zum weiteren Verstärken der Bremswirkung der Brennkraftmaschine (10) aufgrund des Antriebsdrehmoments, das von dem Kühlerlüfter absorbiert wird;
- konstantes Steuern, durch die elektronische Steuereinheit (22), der hydraulischen Bremshilfevorrichtung, der Informationen und der Parameter, die von den Sensoren (24) über den gesamten Zeitraum, in dem die hydraulische Bremshilfevorrichtung aktiv ist, erhalten wurden, Anzeigen jeglicher Fehler und/oder Störungen an den Fahrer des Fahrzeugs über vorbestimmte akustische und/oder optische Signalvorrichtungen des Fahrzeugs.

5. Verfahren nach Anspruch 4, **dadurch gekennzeichnet, dass** die Betriebsbedingungen des Fahrzeugs, die für die Aktivierung der hydraulischen Bremshilfevorrichtung geeignet sind, die aus der Blockventilgruppe (16) besteht, Folgendes umfassen:
- eine Erhöhung, nicht seitens des Fahrers bestimmt, der Drehzahl der Brennkraftmaschine (10) und der Geschwindigkeit des Fahrzeugs;
- das Erreichen einer vordefinierten Position des Beschleunigungspedals der Brennkraftmaschine (10);
- eine Reduktion der Leistung, die von der Brennkraftmaschine (10) zugeführt wird, unter einen vordefinierten Mindestwert;
- das Erreichen eines vordefinierten Felds der Öltemperatur der Hydraulikschaltung (12);
- das Erreichen einer vordefinierten Betriebsbedingung des Servicebremssystems des Fahrzeugs; und
- das Erreichen eines vordefinierten Felds des Fahrzeuglenkwinkels.

6. Verfahren nach Anspruch 4 oder 5, **dadurch gekennzeichnet, dass** während des Aktivierungsschritts der hydraulischen Bremshilfevorrichtung, die elektronische Steuereinheit (22)
- das Übersetzungsverhältnis reduziert, um die Drehzahl der Brennkraftmaschine (10) innerhalb eines vordefinierten Bereichs aufrechtzuerhalten; und
- ein Energiesparsystem deaktiviert, das aus einem Bypass-System (14) der Hydraulikpumpe besteht, das auf der jeweiligen Hydraulikschaltung (12) montiert ist.

7. Verfahren nach einem der Ansprüche 4 bis 6, **dadurch gekennzeichnet, dass** im Schritt des Steuerns der hydraulischen Bremshilfevorrichtung die elektronische Steuereinheit (22) die Vorwärtsgeschwindigkeit des Fahrzeugs konstant steuert, um diese in etwa rund um einen vordefinierten Geschwindigkeitswert zu halten, der zum Zeitpunkt der Aktivierungszeit der hydraulischen Bremshilfevorrichtung berechnet oder durch den Benutzer über eine "Cruise Speed Control"-Funktion definiert wurde.

8. Verfahren nach einem der Ansprüche 4 bis 7, **dadurch gekennzeichnet, dass** im Schritt des Steuerns der hydraulischen Bremshilfevorrichtung und im Falle der Detektion von Situationen, die potenziell die Stabilität und/oder einen möglichen Anhänger davon kritisch sind, die elektronische Steuereinheit (22) eine spezielle Warnung für den Fahrer des Fahrzeugs für die rasche Betätigung des Servicebremssystems erzeugt.

## Revendications

1. Véhicule comprenant :
- un moteur à combustion interne (10) ;
- un ou plusieurs circuits de commande hydrauliques (12) reliés de manière opérationnelle au dit moteur à combustion interne (10), chaque circuit hydraulique (12) étant configuré pour contrôler un ou plusieurs dispositifs du véhicule et comprenant au moins une pompe hydraulique (14) capable de transformer l'énergie mécanique extraite du moteur à combustion interne (10), ou de la transmission reliée aux roues du véhicule, en énergie hydraulique, dans lequel ladite énergie mécanique consiste en une quantité variable du couple d'entraînement absorbé par la pompe hydraulique (14) du moteur à combustion interne (10), ou de la transmission reliée aux roues du véhicule ;
- une unité de commande électronique (22) capable de gérer et/ou calculer une pluralité d'informations et de paramètres concernant le fonctionnement des dispositifs embarqués du véhicule, lesdites informations et lesdits paramètres étant détectés par une pluralité de capteurs (24) installés à bord du véhicule et étant ainsi envoyés à l'unité de commande électronique (22) par des canaux de communication correspondants ;
**caractérisé en ce qu'**au moins un des circuits hydrauliques (12) est pourvu :
- d'au moins un groupe de valves d'arrêt (16) comprenant :
- une première valve (18) à commande électromagnétique capable d'activer et désactiver ledit groupe de valves d'arrêt (16) de sorte que, lorsque le courant électrique ne traverse pas ladite première valve (18), le groupe de valve d'arrêt (16) est totalement inactif, le circuit hydraulique relatif (12) est totalement efficace pour contrôler des dispositifs respectifs et la valeur de l'action de freinage exercée par le moteur à combustion interne (10) en fonction de la variation du couple d'entraînement relatif est équivalente à zéro ; et
- une deuxième valve proportionnelle de contrôle de pression (20) à commande électromagnétique, capable de contrôler proportionnellement la pression exercée par la pompe hydraulique (14) sur le fluide circulant dans le circuit hydraulique (12) afin de réguler ainsi le couple absorbé par la pompe hydraulique (14), ladite seconde valve proportionnelle de contrôle de pression (20) étant activée lorsque la première valve (18) est activée à son tour, ledit au moins un groupe de valves d'arrêt (16) étant capable de convertir une partie de l'énergie cinétique du véhicule en énergie hydraulique, par le biais du contrôle de pression exercée par la pompe hydraulique (14) sur le fluide circulant dans ledit circuit hydraulique (12), dans lequel la variation contrôlée de la pression exercée par la seconde valve proportionnelle de contrôle de pression (20) de la pompe hydraulique (14) sur le fluide circulant dans ledit circuit hydraulique (12) génère une quantité de couple résistant appliquée au moteur à combustion interne (10) ou à la transmission reliée aux roues du véhicule, convertissant ladite énergie hydraulique en énergie thermique et déterminant ainsi une action de freinage du véhicule ; et
- au moins un échangeur de chaleur relié de façon opérationnelle au circuit hydraulique (12), capable de dissiper l'énergie thermique générée par l'action de freinage provoquée par le groupe de valves d'arrêt (16),
dans lequel un ventilateur de refroidissement est connecté de façon opérationnelle à ladite unité de commande électronique (22) pour augmenter sa vitesse de rotation simultanément à l'activation du dispositif de freinage hydraulique auxiliaire.

2. Véhicule selon la revendication 1, **caractérisé en ce que** le groupe de valves d'arrêt (16) est connecté de façon opérationnelle à l'unité de commande électronique (22) et est automatiquement activé par ladite unité de commande électronique (22) en fonction des conditions de fonctionnement du véhicule obtenues des informations fournies par les capteurs (24).

3. Véhicule selon la revendication 1 ou 2, **caractérisé en ce que** la pompe hydraulique (14) est pourvue d'un circuit de refroidissement qui utilise un fluide de refroidissement de nature liquide ou gazeuse.

4. Procédé de freinage auxiliaire d'un véhicule avec moteur à combustion interne (10) selon l'une quelconque des revendications 1 à 3, **caractérisé en ce que** le procédé comprend les étapes suivantes :
- contrôler, à l'aide de l'unité de commande électronique (22), les informations et les paramètres obtenus des capteurs correspondants (24), en identifiant éventuellement les conditions de fonctionnement du véhicule recommandées pour l'activation du dispositif de freinage hydraulique auxiliaire, constitué du groupe de valves d'arrêt (16) ;
- activer, à l'aide de l'unité de commande électronique (22), et si une ou plusieurs des conditions de fonctionnement du véhicule identifiées par les capteurs (24) sont satisfaites, le dispositif de freinage hydraulique auxiliaire et actionner simultanément un ou plusieurs dispositifs embarqués déterminés du véhicule pour rendre efficace le fonctionnement dudit dispositif de freinage hydraulique auxiliaire,
dans lequel l'étape d'activation du dispositif de freinage hydraulique auxiliaire se produit en alimentant initialement la première valve (18) avec une commande électromagnétique du groupe de valves d'arrêt (16) et en alimentant ainsi, avec un courant modulé, la deuxième valve proportionnelle de contrôle de pression (20) dudit groupe de valves d'arrêt (16),
et dans lequel l'étape consistant à actionner simultanément un ou plusieurs dispositifs embarqués déterminés du véhicule comprend l'augmentation de la vitesse de rotation du ventilateur de refroidissement du moteur à combustion interne (10), à la fois pour améliorer les conditions de refroidissement, dissiper la quantité d'énergie maximale possible, et davantage augmenter l'action de freinage du moteur à combustion interne (10), en raison du couple d'entraînement absorbé par ledit ventilateur de refroidissement ;
- contrôler en permanence, à l'aide de l'unité de commande électronique (22), le dispositif de freinage hydraulique auxiliaire, les informations et les paramètres obtenus des capteurs (24) durant toute la période de temps pendant laquelle ledit dispositif de freinage hydraulique auxiliaire est actif, en indiquant les erreurs et/ou les dysfonctionnements éventuels au conducteur du véhicule à travers les dispositifs de signalisation acoustiques et/ou optiques prédéterminés dudit véhicule.

5. Procédé selon la revendication 4, **caractérisé en ce que** les conditions de fonctionnement du véhicule recommandées pour l'activation du dispositif de freinage hydraulique auxiliaire constitué du groupe de valves d'arrêt (16) comprennent :
- l'augmentation, non déterminée par le conducteur, de la vitesse de rotation du moteur à combustion interne (10) et de la vitesse du véhicule ;
- l'atteinte d'une position prédéfinie de l'accélérateur du moteur à combustion interne (10) ;
- la réduction de la puissance fournie par le moteur à combustion interne (10) en dessous d'une valeur prédéfinie minimale ;
- l'atteinte d'un champ prédéfini de la température d'huile du circuit hydraulique (12) ;
- l'atteinte d'un état de fonctionnement prédéfini du système de freinage de service du véhicule ; et
- l'atteinte d'un champ prédéfini de l'angle de braquage du véhicule.

6. Procédé selon la revendication 4 ou 5, **caractérisé en ce que**, durant l'étape d'activation du dispositif de freinage hydraulique auxiliaire, l'unité de commande électronique (22) :
- réduit le rapport de transmission pour maintenir la vitesse de rotation du moteur à combustion interne (10) dans une plage prédéfinie ; et
- désactive un système d'économie d'énergie constitué d'un système de dérivation de la pompe hydraulique (14) monté sur le circuit hydraulique respectif (12).

7. Procédé selon l'une quelconque des revendications 4 à 6, **caractérisé en ce que**, à l'étape de contrôle du dispositif de freinage hydraulique auxiliaire, l'unité de commande électronique (22) contrôle en permanence la vitesse d'avancement du véhicule, de sorte à le maintenir environ autour d'une valeur de vitesse prédéfinie, calculée à l'instant d'activation du dispositif de freinage hydraulique auxiliaire ou définie par l'utilisateur via une fonction de « contrôle de la vitesse de croisière ».

8. Procédé selon l'une quelconque des revendications 4 à 7, **caractérisé en ce que**, à l'étape de contrôle du dispositif de freinage hydraulique auxiliaire et en cas de détection de situations potentiellement critiques pour la stabilité du véhicule et/ou d'une éventuelle remorque de celui-ci, l'unité de commande électronique (22) génère un avertissement spécifique à l'intention du conducteur du véhicule pour l'activation rapide du système de freinage de service.
